# EUROPEAN PATENT SPECIFICATION

(11) **EP 2 749 666 B1**
(45) Date of publication and mention of the grant of the patent: **09.10.2019**
(21) Application number: 13198775.2
(22) Date of filing: 20.12.2013
(51) Int. Cl.: C22C 38/02, C22C 38/26, C22C 38/06, C22C 38/42, C22C 38/46, C22C 38/44, C22C 38/52, C22C 38/36, C22C 38/12, C22C 38/16, C22C 38/22, C22C 38/24, F16C 33/12, F16C 33/32

(54) **Thermo-mechanical process for martensitic bearing steels and steel bearing component**
Thermomechanisches Verfahren für martensitischen Lagerstahl und Stahllagerbauteil
Procédé thermomécanique pour aciers de palier martensitique et composant de palier en acier

(30) Priority: 31.12.2012 US 201261747836 P
(43) Date of publication of application: 02.07.2014
(73) Proprietor: Aktiebolaget SKF, 415 50 Göteborg (SE)
(72) Inventor: McCoy, Bryan A., Jamestown, NY 14701 (US); Zimmerman, Gregory A., Erie, PA 16510 (US); Anthony, Don, Warren, PA 16365 (US); Ragen, Mark A., Lakewood, NY 14750 (US)
(74) Representative: Kloker, Markus

(56) References cited:
- WO-A1-2013/173009
- US-A1- 2006 201 650
- US-B2- 6 966 954

## Description

The present teachings generally relate to improved processes for manufacturing bearing components for roller (rolling element) bearing applications, as well as to improved bearing components and roller (rolling element) bearings containing the same.

High performance mechanical systems such as bearings and gears in advanced gas turbine engines are required to operate at ever increasing speeds, temperatures and loads. Known bearing steels have been developed to handle the existing operating conditions but are limited in achieving higher speeds and loads under current heat treatment and processing operations.

Processing operations, both mechanical and thermal, have been developed to improve surface hardness and residual stress in order to affect bearing life. Operations such as scouring and peening are mechanical operations designed to impart compressive stress into the bearing component. Thermal processing such as nitriding has been developed to increase the component's ability to improve surface residual stress and hardness, providing both increased fatigue life and a better ability to handle debris damage. See e.g., US Patent No. 6,966,954.

Additional references that provide background for the present teachings are:
1. C.M.R. Wilkinson and A.V. Oliver, "The Durability of Gear and Disc Specimens - Part I: The Effect of Some Novel Materials and Surface Treatments", Tribology Transactions, Vol. 42, 1999, pp. 503-510;
2. David P. Davies, "Duplex Hardening: An Advanced Surface Treatment", Heat Treating, Aug 1992
3. N. Binot, A. Viville, H. Carrerot, "Duplex treatment, carburizing and nitriding of a secondary hardening steel, Application to aeronautical ball bearings", Treatments and Tribology, October 2001 - No. 334

US 6,966,954 B2 relates to ball and roller bearings with improved resistance to spallation, and specifically to ball and roller bearings used at high speeds and heavy loads, such as ball/roller bearings used in aircraft engines, having limited case depth of nitrogen and controlled nitrogen content within that case depth.

US 2006/0201650 A1 relates to a casting die and a surface treatment method.

WO 2013/173009 A1 relates to a process for manufacturing high performance rolling elements and bearing rings for aerospace bearing applications. WO 2013/173009 A1 is comprised in the state of the art by virtue of Article 54(3) EPC.

It is an object of the present invention to provide superior fatigue life characteristics in bearing components.

This object is achieved by the inventions recited in the independent claims. Further developments of the invention are recited in the dependent claims.

The present teachings achieve surprisingly improved fatigue life characteristics in steel components, e.g., for bearing applications, by subjecting a steel bearing component (such as bearing balls) to both scouring and nitriding processes, which increases the magnitude of the compressive residual stress in the steel component, thereby improving the ability of the steel component to handle higher loads and debris damage without premature failure. An increase in rolling contact fatigue life is also a benefit of this combination of processes.

The sole Figure shows a comparison of compressive residual stress profiles for bearing balls prepared according to the present teachings (Scoured/Nitrided Balls) and bearing balls prepared without both scouring and nitriding.

Bearings are basically comprised of an inner race (ring), an outer race (ring) and roller (rolling) elements (e.g., balls) disposed therebetween. In preferred aspects of the present teachings, one or more components of a roller (rolling element) bearing are made from steel that has been scoured (peened) and then nitrided (case-hardened) to a depth of about 0.002-0.014 inches (2 to 14 mils; 0.0508-0.3556 mm), preferably about 0.008 inches (0.20 mm). Preferably, the steel is M50 steel, M50NiL steel or 52100 steel.

The nitriding treatment preferably avoids the formation of intergranular precipitates and also does not result in the decarburization of the surface of the steel.

While the entire surface of one or more of the bearing elements may be nitrided, portions of the bearing surfaces may be masked, if desired so as not to be nitrided. Preferably, at least the roller (rolling) elements have been treated according to the present teachings, but it is also possible to treat other wear surfaces according to the present teachings, such as the raceway surfaces of the inner race and the outer race as well as the lands of the raceways. The bearing may include a cage, separator or retainer for separating the roller (rolling) elements, which may be comprised of any suitable material.

M50 steel is often used as a bearing material for aircraft engine applications and is comprised of, in weight percent, about 0.80-0.85% carbon, about 4.00-4.25% chromium, about 4.00-4.50% molybdenum, about 0.15-0.35% manganese, about 0.10-0.25% silicon, about 0.9-1.10% vanadium, 0.015% max. phosphorus, 0.010% max. sulfur, 0.15% max. nickel, 0.25% max. cobalt, 0.25% max. tungsten, 0.10% max. copper and the balance being essentially iron.

M50NiL steel is a low carbon, high nickel variant of the M50 alloy. M50NiL also has been often used as a bearing material for aircraft engine applications, and is comprised of, in weight percent, about 0.11-0.15% carbon, about 4.00-4.25% chromium, about 4.00-4.50% molybdenum, about 0.15-0.35% manganese, about 0.10-0.25% silicon, about 3.20-3.60% nickel, about 1.13-1.33% vanadium, 0.015% max. phosphorus, 0.010% max. sulfur, 0.25% max cobalt, 0.25% max. tungsten, 0.10% max. copper and the balance being essentially iron.

52100 steel is a high carbon, low alloy steel. 52100 also has been often used as a bearing material for aircraft engine applications, and is comprised of, in weight percent, about 0.93-1.05% carbon, about 1.35-1.60% chromium, about 0.010% max molybdenum, about 0.25-0.45% manganese, about 0.15-0.35% silicon, about 0.25% max nickel, about 0.025% max. phosphorus, 0.015% max. sulfur, 0.050% max aluminum, 0.0015% max. oxygen, 0.30% max. copper and the balance being essentially iron.

As used herein, the expression "the balance being essentially iron" is understood to include, in addition to iron, e.g., small amounts of impurities and/or other incidental elements, some of which have been described above, that are inherent in steels, which in character and/or amount do not affect the advantageous aspects of the steel.

Prior to the below-described scouring and nitriding process steps, rolling elements, such as balls, may be prepared, in general, by forming ball blanks (heading the ball blanks), soft grinding, heat treatment and then hard grinding. Standard manufacturing techniques known in the art may be utilized for all of these steps.

The above-noted steels have particularly advantageous properties when prepared as martensitic steels. That is, as bearing materials, beneficial properties are achieved by forming a fully martensitic structure and by avoiding or minimizing retained austenite. Retained austenite is soft and may adversely affect the properties of the M50, M50NiL or 52100 steel bearing material and therefore, it is best to be minimized, e.g., by using heat treatment techniques well known in the art such as rapid and severe quenches in suitable quench media, such as for example, an oil or gas quench. If necessary, a cryogenic quench may be utilized to avoid or advantageously reduce the content of the retained austenite. By a rapid quench, the nose of the TTT curve can be avoided and the transformation to martensite can be complete. If a rapid quench does not sufficiently minimize retained austenite, the retained austenite can be reduced from the steel by a series of heat treatments at temperatures well below the γ transition temperature. Multiple ages at temperatures in the range of 1000°F (537.77°C) for M50 and M50NiL steels and 300 - 450°F (148.9-232.2°C) for 52100 steels will promote the formation of carbide precipitates in any retained austenite. Because carbon is an austenite (γ) stabilizer, the formation of these precipitates decreases the concentration of carbon in the austenite and promotes the conversion of austenite to a ferrite+graphite structure such as martensite.

M50NiL steel bearing materials may be carburized to a suitable case depth prior to above-described heat treatment.

Steel bearing components according to the present teachings preferably should be hardened and tempered to provide a martensitic microstructure having a hardness in the HRC58- 64 (e.g., HRC60 - 64) range and retained austenite of less than 3% (more preferably less than 2%) by volume prior to scouring and nitriding. M50NiL steel bearing materials may have a retained austenite volume of less than 6%.

The present teachings then involve subjecting the steel bearing component to a scouring treatment (peening) or alternate treatment to impart residual compressive stresses and then to a nitriding treatment in order to achieve similar goals in improved compressive residual stresses in the component, wherein the nitriding treatment also adds the benefit of increased surface hardness.

The scouring (peening) operation may be performed on the components (e.g., bearing balls) during the grinding operations and prior to nitriding. With respect to bearing balls, the scouring operation may occur prior to hard grind for larger balls (over 1.25" (3.175 cm) diameter) or after hard grind for smaller balls (less than 1.25" (3.175 cm) diameter).

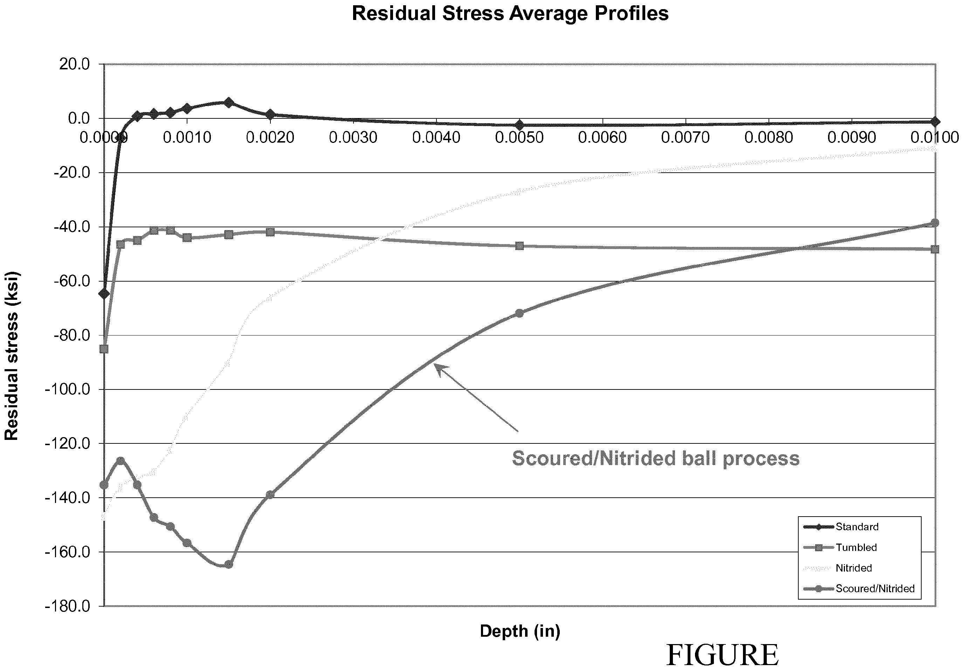

The scouring process may be relatively simple and may be performed using a tumbling barrel with paddles secured internally. These paddles are fixed in position and size. The rotational speed is fixed and the tumbling barrel may rotate in the clockwise direction. The number of balls disposed in the tumbling barrel at one time and the amount of time that the scouring operation is performed may be suitably adjusted to achieve a desired compressive residual stress profile prior to nitriding, such as the compressive residual stress profile for the "Tumbled" ball shown in Figure 1, as will be discussed below. Generally speaking, and without limitation, tumbling speeds of 5-25 rpm and tumbling times of 10-60 minutes may be sufficient, depending upon, e.g., the particular steel bearing material utilized, the ball size, the number of balls, etc., to achieve a desired compressive residual stress profile prior to nitriding. Preferably, the tumbling is performed until the balls exhibit a compressive residual stress of at least -60 ksi (-413 MPa) at the surface of the ball.

However, if the bearing component is not a rolling element, in the alternate, a peening process may be performed, e.g., shot peening, according to known peening techniques, or other suitable processes utilized to generate compressive residual stresses such as low plasticity burnishing, laser shock peening, etc.

Once the steel bearing component has been scoured (peened) and ground (or vice versa), the nitriding process may be subsequently performed. Nitriding is a thermal process performed to introduce nitrogen into the surface of the component in order to impart higher hardness and associated compressive residual stresses to the steel bearing component. The nitriding process involves introduction of nitrogen (typically, in the form of ammonia, but also as nitrogen gas) into a furnace atmosphere, in which the steel component(s) has (have) been placed. The ammonia is dissociated at the surface of the component, thereby creating free nitrogen that diffuses into the component surface. The depth of the nitrided layer is temperature and time dependant. Nitriding can be performed, e.g., using either gas atmosphere with ammonia or a plasma process with nitrogen.

Additional teachings for performing the nitriding treatment are disclosed in US Patent No. 6, 966,954, which is incorporated entirely herein by reference.

Once the nitriding operation has been completed, the balls may be finished using typical processing techniques in the art, such as a final lapping operation.

As a representative example of the present teachings, M50 ball samples were processed, as was generally described above, using both the mechanical scouring process and subsequent thermal nitriding step. The combination of these two processing techniques resulted in an improvement of both surface hardness due to the nitriding process and increased values of the compressive residual stress.

In particular, a surface hardness of 800-1100HV300 and a nitride depth of 0.006-0.010 inches (0.1524-0.254 mm) was achieved by nitriding at temperatures from 842°F to 1022°F (450°C to 550°C) using ammonia as the nitrogen source, resulting in a nitrided case depth of approximately 0.008 inches (0.20 mm). Compressive residual stress values greater than -120 ksi (-827 MPa) to a depth of 0.002 inches (0.05mm) and -40 ksi (-276 MPa) to a minimum depth of 0.010" (0.25 mm) were achieved.

Compressive residual stress measurements were performed using x-ray diffraction on a TEC model 1600 or 4000 X-Ray Diffraction System.

Hardness of HRC 64-72 were observed at the surface of the ball after final processing. The hardness at the surface decays with increasing depths from the surface. A minimum nitrided case depth of 0.004 inches (0.01016 mm), more preferably 0.006 inches (0.01524 mm), measured at 800HV is preferable.

The process according to the present teachings results in a significant and surprising increase in the volume of compressive residual stress on the component while maintaining the benefit of the higher hardness from the nitriding process, as will be demonstrated with reference to the sole Figure.

The comparison stress curves of the Figure were prepared as follows:

Standard = standard processed balls. No additional processing was performed on these balls prior to testing.

Tumbled = balls that were tumbled/scoured as part of the processing prior to finishing. This scouring occurred after hard grind and prior to the final lapping operations. These balls were not nitrided.

Nitrided = Nitrided balls. These balls were nitrided after hard grind and prior to final lapping operations. However, these balls were not scoured/tumbled.

Scoured/Nitrided: These balls were treated in accordance with the present teachings, i.e. they were scoured using the same operations and sequence as the Tumbled balls plus they also received the same nitriding process as the Nitrided balls after scouring and prior to final lapping operations.

As is readily apparent from the results shown in the Figure, the Scoured/Nitrided balls exhibited a far greater compressive residual stress below the surface (note in particular, the range between 0.001-0.002 inches (0.00254-0.00508 mm) below the surface) than a combination of the tumbling and nitriding would have theoretically predicted, in view of the much smaller compressive residual stress values respectively exhibited by the Tumbled balls and the Nitrided balls.

Thus, the scouring and nitriding processes appear to act synergistically in an unexpected manner to achieve much more favorable compressive residual stress profiles.

The balls were all run on a single ball test rig for 100 hrs. The single ball test rig was operated by using a ring above and a ring below the ball to be tested. One ring is driven to cause the ball to rotate under load. Temperature-controlled oil was supplied to the ball along with the load. This test was run for 100 hrs or until failure. All tested Scoured/Nitrided balls ran until suspension of the test (i.e. 100 hrs) without failure.

## Claims

1. A method for treating a steel bearing component having a steel composition consisting of, in wt. %:
0.80-0.85% carbon, 4.00-4.25% chromium, 4.00-4.50% molybdenum, 0.15-0.35% manganese, 0.10-0.25% silicon, 0.9-1.10% vanadium, 0.015% max. phosphorus, 0.010% max. sulfur, 0.15 max.% nickel, 0.25% max. cobalt, 0.25% max. tungsten, 0.10 max.% copper, the balance being essentially iron and unavoidable impurities; or
0.11-0.15% carbon, 4.00-4.25% chromium, 4.00-4.50% molybdenum, 0.15-0.35% manganese, 0.10-0.25% silicon, 3.20-3.60% nickel, 1.13-1.33% vanadium, 0.015% max. phosphorus, 0.010% max. sulfur, 0.25% max cobalt, 0.25% max. tungsten, 0.10 max.% copper, the balance being essentially iron and unavoidable impurities
whereby the steel bearing component has been hardened and tempered to provide a martensitic microstructure with retained austenite of less than 3% by volume and a hardness in the range of HRC 60-64, the method comprising:
- subjecting the steel bearing component to a scouring treatment to impart compressive residual stress to a surface region thereof; and
- subsequently nitriding the steel bearing component to a depth of 0.0508-0.3556 mm at one or more temperatures between 450°C-520°C 10 until a compressive residual stress value greater than -827 MPa is achieved at a depth of 0.05 mm and greater than -276 MPa to a minimum depth of 0.25 mm and until a hardness at its surface between HRC 64-72 is achieved.

2. The method according to claim 1, wherein the steel bearing component is nitrided to a depth of 0.1524-0.254 mm preferably 0.20 mm.

3. The method according to claim 1 or 2, wherein the nitriding step is performed until a compressive residual stress value greater than -965 MPa is achieved at a depth of 0.05 mm.

4. The method according to any preceding claim, wherein the nitriding step is performed until a compressive residual stress value greater than -1103 MPa is achieved at a depth of 0.05 mm.

5. The method according to any preceding claim, wherein the steel bearing component is a race and/or a rolling element.

6. The method according to claim 5, wherein the steel bearing component is a ball.

7. The method according to claim 6, wherein the scouring step is performed by: placing the ball in a tumbling barrel having internally-secured paddles and rotating the tumbling barrel.

8. The method according to claim 7, wherein the tumbling is performed until the balls exhibit a compressive residual stress of at least -413 MPa at the surface of the ball.

9. A steel bearing component made from a steel composition consisting of, in wt.%
0.80-0.85% carbon, 4.00-4.25% chromium, 4.00-4.50% molybdenum, 0.15-0.35% manganese, 0.10-0.25% silicon, 0.9-1.10% vanadium, 0.015% max. phosphorus, 0.010% max. sulfur, 0.15 max.% nickel, 0.25% max. cobalt, 0.25% max. tungsten, 0.10 max.% copper, the balance being essentially iron and unavoidable impurities; or
0.11-0.15% carbon, 4.00-4.25% chromium, 4.00-4.50% molybdenum, 0.15-0.35% manganese, 0.10-0.25% silicon, 3.20-3.60% nickel, 1.13-1.33% vanadium, 0.015% max. phosphorus, 0.010% max. sulfur, 0.25% max cobalt, 0.25% max. tungsten, 0.10 max.% copper, the balance being essentially iron and unavoidable impurities
the steel bearing component primarily having a martensitic microstructure and retained austenite of less than 3% by volume,
and exhibiting:
a nitrided case depth of 0.0508-0.3556 mm and
a hardness at its surface between HRC 64-72;
**characterized by**:
further exhibiting a compressive residual stress value greater than -827 MPa at a depth of 0.05 mm (0.002 inches) and greater than - 276 MPa to a minimum depth of 0.25 mm.

10. The steel bearing component according to claim 9, wherein the steel bearing component is a race and/or a rolling element, preferably a ball.

11. The steel bearing component according to claim 9 or 10, exhibiting:
a nitrided case depth of 0.1524-0.254 mm and
a compressive residual stress value greater than -965 MPa at a depth of 0.05 mm.

12. The steel bearing component according to any one of claims 9-11, exhibiting:
a nitrided case depth of 0.20 mm and
a compressive residual stress value greater than greater than -1103 MPa at a depth of 0.05 mm.

## Patentansprüche

1. Verfahren zur Behandlung einer Lagerkomponente aus Stahl mit einer Stahlzusammensetzung bestehend aus, in Gew.-%:
0,80-0,85 % Kohlenstoff, 4,00-4,25 % Chrom, 4,00-4,50 % Molybdän, 0,15-0,35 % Mangan, 0,10-0,25 % Silicium, 0,9-1,10 % Vanadium, 0,015 % max. Phosphor, 0,010 % max. Schwefel, 0,15 % max. Nickel, 0,25 % max. Cobalt, 0,25 % max. Wolfram, 0,10 % max. Kupfer, wobei der Rest im Wesentlichen Eisen und unvermeidbare Verunreinigungen ist; oder
0,11-0,15 % Kohlenstoff, 4,00-4,25 % Chrom, 4,00-4,50 % Molybdän, 0,15-0,35 % Mangan, 0,10-0,25 % Silicium, 3,20-3,60 % Nickel, 1,13-1,33 % Vanadium, 0,015 % max. Phosphor, 0,010 % max. Schwefel, 0,25 % max. Cobalt, 0,25 % max. Wolfram, 0,10 % max. Kupfer, wobei der Rest im Wesentlichen Eisen und unvermeidbare Verunreinigungen ist,
wobei die Lagerkomponente aus Stahl gehärtet und getempert worden ist, um eine martensitische Mikrostruktur mit Restaustenit von weniger als 3 Vol.-% und eine Härte in dem Bereich von HRC 60-64 zu erhalten, wobei das Verfahren umfasst:
- Unterwerfen der Lagerkomponente aus Stahl an eine Scheuerbehandlung ("scouring"), um einem Oberflächenbereich davon kompressive Eigenspannung zu verleihen; und
- nachfolgend Nitrieren der Lagerkomponente aus Stahl bis zu einer Tiefe von 0,0508-0,3556 mm bei einer oder mehreren Temperaturen zwischen 450 °C und 520 °C 10, bis ein Wert der kompressiven Eigenspannung von größer als -827 MPa bei einer Tiefe von 0,05 mm und größer als -276 MPa bis zu einer Mindesttiefe von 0,25 mm erzielt ist und bis eine Härte an ihrer Oberfläche von zwischen HRC 64 und 72 erzielt ist.

2. Verfahren gemäß Anspruch 1, wobei die Lagerkomponente aus Stahl bis zu einer Tiefe von 0,1524-0,254 mm, vorzugsweise 0,20 mm, nitriert wird.

3. Verfahren gemäß Anspruch 1 oder 2, wobei der Nitrierungsschritt durchgeführt wird, bis ein Wert der kompressiven Eigenspannung von größer als -965 MPa bei einer Tiefe von 0,05 mm erzielt ist.

4. Verfahren gemäß einem der vorstehenden Ansprüche, wobei der Nitrierungsschritt durchgeführt wird, bis ein Wert der kompressiven Eigenspannung von größer als -1103 MPa bei einer Tiefe von 0,05 mm erzielt ist.

5. Verfahren gemäß einem der vorstehenden Ansprüche, wobei die Lagerkomponente aus Stahl ein Laufring und/oder ein Rollelement ist.

6. Verfahren gemäß Anspruch 5, wobei die Lagerkomponente aus Stahl eine Kugel ist.

7. Verfahren gemäß Anspruch 5, wobei der Scheuerschritt durchgeführt wird durch:
Anordnen der Kugel in einem Trommelzylinder mit innenliegend befestigten Schaufeln und Drehen des Trommelzylinders.

8. Verfahren gemäß Anspruch 7, wobei das Trommeln durchgeführt wird, bis die Kugeln eine kompressive Eigenspannung von wenigstens -413 MPa an der Oberfläche der Kugel aufweisen.

9. Lagerkomponente aus Stahl, bestehend aus einer Stahlzusammensetzung bestehend aus, in Gew.-%:
0,80-0,85 % Kohlenstoff, 4,00-4,25 % Chrom, 4,00-4,50 % Molybdän, 0,15-0,35 % Mangan, 0,10-0,25 % Silicium, 0,9-1,10 % Vanadium, 0,015 % max. Phosphor, 0,010 % max. Schwefel, 0,15 % max. Nickel, 0,25 % max. Cobalt, 0,25 % max. Wolfram, 0,10 % max. Kupfer, wobei der Rest im Wesentlichen Eisen und unvermeidbare Verunreinigungen ist; oder
0,11-0,15 % Kohlenstoff, 4,00-4,25 % Chrom, 4,00-4,50 % Molybdän, 0,15-0,35 % Mangan, 0,10-0,25 % Silicium, 3,20-3,60 % Nickel, 1,13-1,33 % Vanadium, 0,015 % max. Phosphor, 0,010 % max. Schwefel, 0,25 % max. Cobalt, 0,25 % max. Wolfram, 0,10 % max. Kupfer, wobei der Rest im Wesentlichen Eisen und unvermeidbare Verunreinigungen ist,
wobei die Lagerkomponente aus Stahl hauptsächlich eine martensitische Mikrostruktur und Restaustenit von weniger als 3 Vol.-% aufweist,
und aufweist:
eine Nitriertiefe von 0,0508-0,3556 mm und
eine Härte an ihrer Oberfläche von zwischen HRC 64 und 72;
**gekennzeichnet durch**:
ferner Aufweisen eines Werts der kompressiven Eigenspannung von größer als -827 MPa bei einer Tiefe von 0,05 mm (0,002 Inch) und größer als -276 MPa bis zu einer Mindesttiefe von 0,25 mm.

10. Lagerkomponente aus Stahl gemäß Anspruch 9, wobei die Lagerkomponente aus Stahl ein Laufring und/oder ein Rollelement, vorzugsweise eine Kugel, ist.

11. Lagerkomponente aus Stahl gemäß Anspruch 9 oder 10, aufweisend:
eine Nitriertiefe von 0,1524-0,254 mm und
einen Wert der kompressiven Eigenspannung von größer als -965 MPa bei einer Tiefe von 0,05 mm.

12. Lagerkomponente aus Stahl gemäß einem der Ansprüche 9-11, aufweisend:
eine Nitriertiefe von 0,20 mm und
einen Wert der kompressiven Eigenspannung von größer als -1103 MPa bei einer Tiefe von 0,05 mm.

## Revendications

1. Procédé de traitement d'un composant de palier en acier ayant une composition d'acier constituée de, en % en poids :
0,80 à 0,85 % de carbone, 4,00 à 4,25 % de chrome, 4,00 à 4,50 % de molybdène, 0,15 à 0,35 % de manganèse, 0,10 à 0,25 % de silicium, 0,9 à 1,10 % de vanadium, 0,015 % max. de phosphore, 0,010 % max. de soufre, 0,15 % max. de nickel, 0,25 % max. de cobalt, 0,25 % max. de tungstène, 0,10 % max. de cuivre, le reste étant essentiellement du fer et des impuretés inévitables ; ou
0,11 à 0,15 % de carbone, 4,00 à 4,25 % de chrome, 4,00 à 4,50 % de molybdène, 0,15 à 0,35 % de manganèse, 0,10 à 0,25 % de silicium, 3,20 à 3,60 % de nickel, 1,13 à 1,33 % de vanadium, 0,015 % max. de phosphore, 0,010 % max. de soufre, 0,25 % max. de cobalt, 0,25 % max. de tungstène, 0,10 % max. de cuivre, le reste étant essentiellement du fer et des impuretés inévitables
dans lequel le composant de palier en acier a été durci et trempé pour produire une microstructure martensitique avec de l'austénite retenue de moins de 3 % en volume et une dureté dans la plage de HRC 60 à 64, le procédé comprenant :
- la soumission du composant de palier en acier à un traitement de décapage pour conférer une contrainte de compression résiduelle à une région de surface de celui-ci ; et
- ensuite, la nitruration du composant de palier en acier à une profondeur de 0,0508 à 0,3556 mm à une ou plusieurs températures comprises entre 450 °C et 520 °C jusqu'à ce qu'une valeur de contrainte de compression résiduelle supérieure à -827 MPa soit obtenue à une profondeur de 0,05 mm et supérieure à -276 MPa à une profondeur minimale de 0,25 mm et jusqu'à ce qu'une dureté à sa surface entre HRC 64 et 72 soit obtenue.

2. Procédé selon la revendication 1, dans lequel le composant de palier en acier est nitruré à une profondeur de 0,1524 à 0,254 mm de préférence 0,20 mm.

3. Procédé selon la revendication 1 ou 2, dans lequel l'étape de nitruration est effectuée jusqu'à ce qu'une valeur de contrainte de compression résiduelle supérieure à -965 MPa soit obtenue à une profondeur de 0,05 mm.

4. Procédé selon l'une quelconque des revendications précédentes, dans lequel l'étape de nitruration est effectuée jusqu'à ce qu'une valeur de contrainte de compression résiduelle supérieure à -1103 MPa soit atteinte à une profondeur de 0,05 mm.

5. Procédé selon l'une quelconque des revendications précédentes, dans lequel le composant de palier en acier est une bague et/ou un élément de roulement.

6. Procédé selon la revendication 5, dans lequel le composant de palier en acier est une bille.

7. Procédé selon la revendication 6, dans lequel l'étape de décapage est effectuée par : placement de la bille dans un tambour culbuteur comportant des pales fixées de façon interne et rotation du tambour culbuteur.

8. Procédé selon la revendication 7, dans lequel le culbutage est effectué jusqu'à ce que les billes présentent une contrainte de compression résiduelle d'au moins -413 MPa à la surface de la bille.

9. Composant de palier en acier constitué d'une composition d'acier constituée de, en % en poids, 0,80 à 0,85 % de carbone, 4,00 à 4,25 % de chrome, 4,00 à 4,50 % de molybdène, 0,15 à 0,35 % de manganèse, 0,10 à 0,25 % de silicium, 0,9 à 1,10 % de vanadium, 0,015 % max. de phosphore, 0,010 % max. de soufre, 0,15 % max. de nickel, 0,25 % max. de cobalt, 0,25 % max. de tungstène, 0,10 % max. de cuivre, le reste étant essentiellement du fer et des impuretés inévitables ; ou
0,11 à 0,15 % de carbone, 4,00 à 4,25 % de chrome, 4,00 à 4,50 % de molybdène, 0,15 à 0,35 % de manganèse, 0,10 à 0,25 % de silicium, 3,20 à 3,60 % de nickel, 1,13 à 1,33 % de vanadium, 0,015 % max. de phosphore, 0,010 % max. de soufre, 0,25 % max. de cobalt, 0,25 % max. de tungstène, 0,10 % max. de cuivre, le reste étant essentiellement du fer et des impuretés inévitables le composant de palier en acier ayant principalement une microstructure martensitique et une austénite retenue inférieure à 3 % en volume, et présentant :
une profondeur de nitruration de 0,0508 à 0,3556 mm et
une dureté à sa surface comprise entre HRC 64 et 72 ;
**caractérisé en ce que** :
il présente en outre une valeur de contrainte de compression résiduelle supérieure à -827 MPa à une profondeur de 0,05 mm (0,002 pouce) et supérieure à -276 MPa à une profondeur minimale de 0,25 mm.

10. Composant de palier en acier selon la revendication 9, le composant de palier en acier étant une bague et/ou un élément de roulement, de préférence une bille.

11. Composant de palier en acier selon la revendication 9 ou 10, présentant :
une profondeur de nitruration de 0,1524 à 0,254 mm, et
une valeur de contrainte de compression résiduelle supérieure à -965 MPa à une profondeur de 0,05 mm.

12. Composant de palier en acier selon l'une quelconque des revendications 9 à 11, présentant :
une profondeur de nitruration de 0,20 mm, et
une valeur de contrainte de compression résiduelle supérieure à -1103 MPa à une profondeur de 0,05 mm.
